Europäisches Patentamt

(19) European Patent Office

Office européen des brevets

(11) **EP 0 462 585 B1**

(12) **EUROPEAN PATENT SPECIFICATION**

(45) Date of publication and mention
of the grant of the patent:
**17.01.1996 Bulletin 1996/03**

(51) Int. Cl.⁶: **A01N 47/36**
// (A01N47/36, 57:20)

(21) Application number: **91110038.6**

(22) Date of filing: **19.06.1991**

(54) **Herbicidal composition**

Herbizide Zusammensetzung

Composition herbicide

(84) Designated Contracting States:
**AT BE CH DE DK ES FR GB GR IT LI LU NL SE**

(30) Priority: **20.06.1990 JP 162191/90**
**26.03.1991 JP 132444/90**

(43) Date of publication of application:
**27.12.1991 Bulletin 1991/52**

(73) Proprietor: **ISHIHARA SANGYO KAISHA, LTD.**
**Nishi-ku Osaka-shi Osaka (JP)**

(72) Inventors:
• **Sakashita, Nobuyuki,**
**Ishihara Sangyo Kaisha, Ltd.**
**Kusatsu-shi, Shiga (JP)**
• **Yoshii, Hiroshi,**
**Ishihara Sangyo Kaisha, Ltd.**
**Kusatsu-shi, Shiga (JP)**
• **Yoshida, Tsunezo,**
**Ishihara Sangyo Kaisha, Ltd.**
**Kusatsu-shi, Shiga (JP)**

• **Honzawa, Shooichi,**
**Ishihara Sangyo Kaisha, Ltd.**
**Kusatsu-shi, Shiga (JP)**
• **Kikugawa, Hiroshi,**
**Ishihara Sangyo Kaisha, Ltd.**
**Kusatsu-shi, Shiga (JP)**

(74) Representative: **Hansen, Bernd, Dr.rer.nat. et al**
**D-81904 München (DE)**

(56) References cited:
**EP-A- 0 184 385          EP-A- 0 252 237**

• **Calculating synergistic and antagonistic**
**responses of herbicide combinations, S.R. Colby**
• **Neth.J.Plant Path.,70 (1964), pp.73-80**

Remarks:
The file contains technical information submitted
after the application was filed and not included in this
specification

## Description

FIELD OF THE INVENTION

The present invention relates to a herbicidal composition comprising, as active ingredients, 1-(4,6-dimethoxypyrimidin-2-yl)-3-(3-trifluoromethyl-2-pyridylsulfonyl)urea (hereinafter referred to as "Compound A") or a salt thereof and at least one member selected from the group consisting of homoalanin-4-yl(methyl)phosphinic acid (hereinafter referred to as "Compound B"), 2-amino-4-[(hydroxy)(methyl)phosphinoyl]butyrylalanylalanine (hereinafter referred to as "Compound C") and salts thereof.

BACKGROUND OF THE INVENTION

Many kinds of herbicides have been developed and are used nowadays.

EP-A-0 252 237 discloses a herbicidal composition comprising a combination of a phosphonylated compound having a specific formula with a sulfonyl-urea derivative. A 4,6-dimethoxypyrimidin-2-yl residue is linked to the nitrogen atom of the urea moiety whilst among others a substituted or unsubstituted phenyl, benzyl, phenoxy, pyrazolyl or thienyl group may be linked with the sulfonyl moiety.

Since objects for control with a herbicide include a wide variety of weeds with a long duration of emergence, there has been a demand for development of a herbicide having a wider herbicidal spectrum, a high activity and a persistent herbicidal effect.

As a result of extensive investigations with a view to developing a herbicide with characteristics as mentioned above, the inventors of the present invention have found out that the herbicidal composition of the present invention can control a wide variety of weeds emerging in crop lands as well as non-crop lands. More specifically, it has been found out that the herbicidal effect of the herbicidal composition of the present invention is unexpectedly higher than the mere addition of the herbicidal effects of individual active ingredients and, in short, is manifested as a synergistic herbicidal effect, whereby the herbicidal composition of the present invention may be applied in smaller amounts of the active ingredients with an expanded herbicidal spectrum and a persistent herbicidal effect as compared with any one of the individual active ingredients when singly applied. Thus, the present invention has been completed.

SUMMARY OF THE INVENTION

An object of the present invention is to provide a herbicidal composition comprising, as active ingredients, Compound A or a salt thereof and at least one member selected from the group consisting of Compound B, salts of Compound B, Compound C and salts of Compound C.

DETAILED DESCRIPTION OF THE INVENTION

Compound B and its salts as well as Compound C and its salts as active ingredients usable in the herbicidal composition of the present invention encompass optical isomers, examples of which include D,L-homoalanin-4-yl(methyl)phosphinic acid (common name: D,L-glufosinate, hereinafter referred to as "D,L-isomer of Compound B"), L-homoalanin-4-yl(methyl)phosphinic acid (common name: L-glufosinate, hereinafter referred to as "L-isomer of Compound B"), and L-2-amino-4-[(hydroxy)(methyl)phosphinoyl]butyryl-L-alanyl-L-alanine (common name: bialaphos, hereinafter referred to as "L-isomer of Compound C").

Examples of salts of Compound A that can be used as one of the active ingredients in the herbicidal composition of the present invention include alkali metal salts such as sodium and potassium salts; alkaline earth metal salts such as magnesium and calcium salts; amine salts such as monomethylamine, dimethylamine and triethylamine salts; and salts of quaternary ammonium bases such as trimethylethylammonium cation and tetramethylammonium cation. Examples of salts of Compounds B and C that can be used as the other one of the active ingredients include salts of Compounds B and C with inorganic or organic bases, preferable examples of which include sodium salts, ammonium salts and alkyl-substituted ammonium salts of Compounds B and C.

The amount of the at least one member selected from the group consisting of Compound B, salts of Compound B, Compound C and salts of Compound C (hereinafter referred to as "other specific herbicidal compound or compounds") as the above-mentioned other one of the active ingredients of the herbicidal composition of the present invention, relative to the amount of Compound A or its salt as the above-mentioned one of the active ingredients to be mixed therewith, may be in a comparatively wide range. However, the amount of the other specific herbicidal compound is usually from 0.1 to 300 parts by weight, preferably from 4 to 100 parts by weight, and more preferably from 5 to 70 parts by weight, per part by weight of Compound A or its salt.

The amount of application of the herbicidal composition of the present invention cannot be unequivocally defined because it varies depending on the mixing ratio of the active ingredients, the type of formulation, the kind of object weed, the weather condition, etc. However, it is usually employed such that from 0.05 to 5 g, and preferably from 0.2 to 3 g, per are (are (a) = 100 m²), of Compound A or its salt is used in combination with from 0.3 to 30 g, and preferably from 2.5 to 15 g, per are, of the other specific herbicidal compound(s), with a total amount of the active ingredients being from 0.35 to 35 g, and preferably from 2.5 to 18 g, per are. Where the herbicidal composition of the present invention is applied after being diluted with water, an adjuvant(s) such as a spreader may be additionally used, if desired.

Respective active ingredients are often found to exhibit a defect in terms of the herbicidal activity when applied singly. However, there may be a case that when two kinds of active ingredients are applied in combination, the resulting herbicidal activity is higher than one obtained by simply summing up the activity of each of the two active ingredients (i.e., an expected activity). In such a case, it is said that a synergistic action is found. The expected activity which is brought by a specific combination of two kinds of herbicides can be calculated by the following equation as described, for example, in S.R. Colby, Weeds, "Calculating Synergistic and Antagonistic Responses of Herbicide Combinations", Vol. 15, pp. 20-22 (1967).

$$E = \alpha + \beta - \frac{\alpha \times \beta}{100}$$

In the above equation, $\alpha$ represents a growth inhibition rate (%) when treated with a (g/are) of herbicide A; $\beta$ represents a growth inhibition rate (%) when treated with b (g/are) of herbicide B; and E represents an expected growth inhibition rate (%) when treated with a (g/are) of herbicide A and b (g/are) of herbicide B.

That is, if an actual growth inhibition rate (found value) is higher than the growth inhibition rate (calculated value) by the above-mentioned calculation, it can be said that the activity brought by the combination of herbicides exhibits a synergistic action.

The herbicidal composition of the present invention is extremely high in usefulness so that it completely exterminates a wide variety of weeds ranging from annual weeds to perennial weeds even when used in small amounts of the active ingredients. Also, when applied at the time of either pre-emergence or post-emergence of weeds, it is effective so that it can exhibit a high level of herbicidal effect when used according to either soil treatment application or foliage treatment application. Therefore, the herbicidal composition of the present invention is useful for control of weeds not only in the agricultural and horticultural fields involving upland fields, orchards, etc., but also in non-crop lands including playgrounds, vacant lots, forests, and tank yards (areas of storage tanks).

The herbicidal composition of the present invention is prepared by blending various adjuvants with Compound A or its salt and the other specific herbicidal compound(s) into a formulation such as a wettable powder, a suspension concentrate, a water-dispersible granule, a granule, a dust, a water-soluble granule, a water-soluble powder, or a soluble concentrate according to any customary method of preparing agricultural chemicals. Compound A or its salt and the other specific herbicidal compound(s) may be either mixed together and prepared into a formulation, or prepared into separate formulations and mixed together.

The above-mentioned formulations of the herbicidal composition of the present invention may contain from 1 to 98%, and preferably from 2 to 95%, in terms of weight ratio, of the active ingredients.

Examples of the above-mentioned adjuvants include solid carriers such as diatomaceous earth, slaked lime, calcium carbonate, talc, white carbon, kaolin, bentonite, zieclite, water-soluble starch, sodium carbonate, sodium bicarbonate, and sodium sulfate; antifreezing agents such as ethylene glycol and propylene glycol; spreaders and surfactants such as salts of alkyl sulfates, salts of alkylbenzenesulfonates, salts of lignosulfonate, polyoxyethylene glycol alkyl ethers, polyoxyethylene lauryl ethers, polyoxyethylene alkylaryl ethers, polyoxyethylene fatty acid esters, polyoxyethylene sorbitan fatty acid esters, polyoxyethylene styrylphenyl ethers, salts of polycarboxylates, salts of dialkyl sulfosuccinates, salts of alkyl diglycol ether sulfates, salts of polyoxyethylene alkylaryl ether sulfates, salts of polyoxyethylene alkylaryl phosphates, polyoxyethylene hydrogenated castor oil, salts of styrylphenyl phosphate, and condensates of salts of naphthalenesulfonate and formalin; crop oils and mineral oils such as olive oil, kapok oil, castor oil, paraya oil, camellia oil, coconut oil, sesame oil, corn oil, rice bran oil, peanut oil, cotton seed oil, soybean oil, rape seed oil, linseed oil, tung oil, and liquid paraffin; solvents such as propylene glycol monomethyl ether; thixotropic materials such as aluminum magnesium silicate and bentonite-alkylamino complexes; and thickeners such as xanthangum. The above-mentioned adjuvants may be used in a preliminarily mixed form thereof, if desired. The herbicidal composition of the present invention, prepared in the foregoing manner, may further comprise other herbicides, insecticides, fungicides, and/or plant growth regulators incorporated thereinto.

A description will now be made of Formulation Examples of the herbicidal composition of the present invention, which are, however, not restrictive.

Formulation Example 1

| | |
|---|---|
| (1) Ammonium salt of D,L-isomer of Compound B | 18.5 parts by weight |
| (2) Sodium salt of Compound A | 1.3 parts by weight |
| (3) Sodium alkyl diglycol ether sulfate | 30 parts by weight |
| (4) Propylene glycol monomethyl ether | 20 parts by weight |
| (5) Water | 30.2 parts by weight |

The above-mentioned components are mixed together to obtain a soluble concentrate.

Formulation Example 2

| | |
|---|---|
| (1) Ammonium salt of D,L-isomer of Compound B | 30 parts by weight |
| (2) Compound A | 2 parts by weight |
| (3) Soybean oil | 54 parts by weight |
| (4) Bentonite-alkylamino complex (New D Orben®: manufactured by Shiraishi Kogyo Kaisha, Ltd.) | 2 parts by weight |
| (5) Mixture of a polyoxyethylene alkylaryl ether, a polyoxyethylene hydrogenated castor oil, a polyoxyethylene alkylaryl phosphate, a sodium dialkyl sulfosuccinate and a polyoxyethylene fatty acid ester (Sorpol 3747K®: manufactured by Toho Chemical Industry Co., Ltd.) | 12 parts by weight |

The above-mentioned components are uniformly mixed together by a wet pulverizer to obtain an oil-based suspension concentrate.

Formulation Example 3

| | |
|---|---|
| (1) Ammonium salt of D,L-isomer of Compound B | 30 parts by weight |
| (2) Compound A | 2 parts by weight |
| (3) Liquid normal paraffin | 51 parts by weight |
| (4) Bentonite-alkylamino complex (New D Orben®) | 2 parts by weight |
| (5) Polyoxyethylene sorbitan trioleate (Sorbon T-85®: manufactured by Toho Chemical Industry Co., Ltd.) | 15 parts by weight |

The above-mentioned components are uniformly mixed together by a wet pulverizer to obtain an oil-based suspension concentrate.

Formulation Example 4

| (1) Ammonium salt of L-isomer of Compound B | 30 parts by weight |
|---|---|
| (2) Compound A | 2 parts by weight |
| (3) Zieclite | 51 parts by weight |
| (4) Condensate of sodium naphthalene-sulfonate and formalin (Lavelin S®: manufactured by Dai-ichi Kogyo Seiyaku Co., Ltd.) | 2 parts by weight |
| (5) White carbon | 10 parts by weight |
| (6) Sodium polyoxyethylene alkylaryl ether sulfate-premix with white carbon (Sorpol 5039®: manufactured by Toho Chemical Industry Co., Ltd.) | 5 parts by weight |

The above-mentioned components are mixed together to obtain a wettable powder.

Formulation Example 5

| (1) Ammonium salt of D,L-isomer of Compound B | 80 parts by weight |
|---|---|
| (2) Compound A | 5 parts by weight |
| (4) Surfactant of special polycarboxylic acid type polymer (Demol EP®: manufactured by Kao Corporation) | 8 parts by weight |
| (5) Sodium sulfate | 7 parts by weight |

The above-mentioned components are dissolved or suspended in a three-fold amount of water and dried by a spray dryer to obtain a water-dispersible granule.

Formulation Example 6

| (1) Ammonium salt of D,L-isomer of Compound B | 40 parts by weight |
|---|---|
| (2) Sodium salt of Compound A | 2 parts by weight |
| (3) Water-soluble starch | 53 parts by weight |
| (4) Sodium lignosulfonate | 5 parts by weight |

The above-mentioned components are mixed together to obtain a water-soluble powder.

Formulation Example 7

| (1) Sodium salt of D,L-isomer of Compound C | 45 parts by weight |
|---|---|
| (2) Compound A | 3 parts by weight |
| (3) Sodium alkyl sulfate (Monogen Y-500®: manufactured by Dai-ichi Kogyo Seiyaku Co., Ltd.) | 20 parts by weight |
| (4) Condensate of sodium napthalene sulfonate and formalin (Lavelin FAN®: manufactured by Dai-ichi Kogyo Seiyaku Co., Ltd.) | 5 parts by weight |
| (5) Sodium lignosulfonate | 10 parts by weight |
| (6) Sodium sulfate | 17 parts by weight |

The above-mentioned components are mixed together to obtain a wettable powder.

Formulation Example 8

| (1) Ammonium salt of D,L-isomer of Compound B | 2 parts by weight |
|---|---|
| (2) Compound A | 0.2 parts by weight |
| (3) Calcium carbonate (fine granules) | 92.8 parts by weight |
| (4) Sodium dialkyl sulfosuccinate (Neocol YSK®: manufactured by Dai-ichi Kogyo Seiyaku Co., Ltd.) | 1 part by weight |
| (5) Polyoxyethylene octylphenyl ether (Noigen EA-92®: manufactured by Dai-ichi Kogyo Seiyaku Co., Ltd.) | 2 parts by weight |
| (6) White carbon | 2 parts by weight |

The above-mentioned components are mixed together to obtain a granule.

Formulation Example 9

| (1) Ammonium salt of D,L-isomer of Compound B | 89 parts by weight |
|---|---|
| (2) Compound A | 6 parts by weight |
| (3) Condensate of sodium naphthalene-sulfonate and formalin (Lavelin FAN®:) | 5 parts by weight |

The above-mentioned components are mixed together to obtain a wettable powder.

Formulation Example 10

| | |
|---|---|
| (1) Ammonium salt of D,L-isomer of compound B | 82.5 parts by weight |
| (2) Compound A | 5.5 parts by weight |
| (3) Sodium bicarbonate | 7 parts by weight |
| (4) Sodium alkyl sulfate (Monogen Y-500®:) | 5 parts by weight |

The above-mentioned components are mixed together to obtain a water-soluble powder.

Formulation Example 11

| | |
|---|---|
| (1) Ammonium salt of D,L-isomer of Compound B | 60 parts by weight |
| (2) Compound A | 4 parts by weight |
| (3) Sodium alkyl sulfate (Monogen Y-500®) | 15 parts by weight |
| (4) Calcium lignosulfonate | 10 parts by weight |
| (5) Sodium sulfate | 11 parts by weight |

The above-mentioned components are mixed together to obtain a wettable powder.

The herbicidal effect of the herbicidal composition of the present invention will now be demonstrated in the following Test Examples.

Test Example 1 (Foliage Treatment Test)

Upland soil was placed in 1/5000-are (are (a) = 100 m$^2$) wagner pots and planted with hills of <u>Solidago</u> <u>altissima</u> collected in the fields, and the hills were thereafter grown in a greenhouse. When the plant height reached 20 to 30 cm, a predetermined amount of each herbicidal composition which had been diluted with 15 $\ell$, per are, of water and further admixed with 0.05 % (v/v) of a spreader (Shin Rino®: manufactured by Nihon Nohyaku Co., Ltd.) was foliarly applied on the plants using a small spray gun. 25 days after the foliage treatment application, the fresh weight of foliage was measured. The growth inhibition rate (%), which is listed in Table 1, was calculated according to the following equation:

$$\text{Growth Inhibition Rate (\%)} = (1 - \frac{\text{Fresh Weight of Foliage in Treated Plot}}{\text{Fresh Weight of Foliage in Untreated Plot}}) \times 100$$

<u>Table 1</u>

| | Amount of Application of Active Ingredients (g/a) | Growth Inhibition Rate (%) |
|---|---|---|
| Compound A | 1 | 63 |
| | 0.5 | 51 |
| | 0.25 | 46 |
| Ammonium salt of D,L-isomer of Compound B (commercial name: Basta) | 10 | 84 |
| | 5 | 72 |
| | 2.5 | 55 |
| Ammonium salt of L-isomer of Compound B | 5 | 77 |
| | 2.5 | 68 |
| | 1.25 | 48 |
| Sodium salt of L-isomer of Compound C (commercial name: Herbi-Ace) | 10 | 79 |
| | 5 | 70 |
| | 2.5 | 51 |
| Compound A + Ammonium salt of D,L-isomer of Compound B (commercial name: Basta) | 1 + 10 | 100 |
| | 1 + 5 | 100 |
| | 1 + 2.5 | 100 |
| | 0.5 + 10 | 100 |
| | 0.5 + 5 | 100 |
| | 0.5 + 2.5 | 88 |
| | 0.25 + 10 | 97 |
| | 0.25 + 5 | 94 |
| | 0.25 + 2.5 | 85 |

## Table 1 (cont'd)

| | Amount of Application of Active Ingredients (g/a) | Growth Inhibition Rate (%) |
|---|---|---|
| | 1 + 10 | 100 |
| | 1 + 5 | 100 |
| Compound A | 1 + 2.5 | 98 |
| + | | |
| Ammonium salt of | 0.5 + 10 | 100 |
| L-isomer of | 0.5 + 5 | 100 |
| Compound B | 0.5 + 2.5 | 92 |
| | 0.25 + 10 | 96 |
| | 0.25 + 5 | 91 |
| | 0.25 + 2.5 | 83 |
| | 1 + 10 | 100 |
| | 1 + 5 | 100 |
| Compound A | 1 + 2.5 | 91 |
| + | | |
| Sodium salt of | 0.5 + 10 | 100 |
| L-isomer of | 0.5 + 5 | 100 |
| Compound C | 0.5 + 2.5 | 89 |
| (commercial name: | | |
| Herbi-Ace) | 0.25 + 10 | 99 |
| | 0.25 + 5 | 93 |
| | 0.25 + 2.5 | 85 |

Test Example 2 (Foliage Treatment Test)

Upland soil was placed in 1/10000-are pots and sown with Digitaria sanguinalis. When the plants reached the four-leaf stage, a predetermined amount of each herbicidal composition which had been diluted with 15 $\ell$, per are, of water and further admixed with 0.2 % (v/v) of a spreader (Shin Rino®) was foliarly applied on the plants using a small spray gun. 20 days after the foliage treatment application, the fresh weight of the aerial part of the plant was measured. The growth inhibition rate (%) calculated by the equation given in Test Example 1 (found value) and the growth inhibition rate (%) calculated by the above-cited Colby equation (calculated value) are listed in Table 2.

## Table 2

| | Amount of Application of Active Ingredients (g/a) | Growth Inhibition Rate (%) | |
|---|---|---|---|
| | | Found | Calculated |
| Compound A | 5 | 99.4 | |
| | 1 | 67.3 | |
| | 0.6 | 47.4 | |
| | 0.4 | 16.9 | |
| | 0.2 | 5.3 | |
| | 0.1 | 3.5 | |
| | 0.05 | 0 | |
| Ammonium salt of D,L-isomer of Compound B (commercial name: Basta) | 10 | 100 | |
| | 4 | 90 | |
| | 3 | 85 | |
| | 2 | 52.3 | |
| | 1 | 35.8 | |
| | 0.5 | 12.8 | |
| | 0.3 | 0.9 | |
| Compound A + Ammonium salt of D,L-isomer of Compound B (commercial name: Basta) | 1 + 0.5 | 99.4 | 71.5 |
| | 1 + 0.3 | 90.3 | 67.6 |
| | 0.6 + 0.5 | 95.0 | 54.1 |
| | 0.6 + 0.3 | 96.3 | 47.9 |
| | 0.4 + 0.5 | 95.7 | 27.5 |
| | 0.4 + 0.3 | 91.9 | 17.6 |
| | 0.2 + 4 | 96.9 | 90.5 |
| | 0.2 + 3 | 95.4 | 85.8 |
| | 0.2 + 2 | 86.9 | 54.8 |
| | 0.2 + 1 | 81.3 | 39.2 |
| | 0.2 + 0.5 | 78.8 | 17.4 |
| | 0.2 + 0.3 | 72.3 | 6.2 |
| | 0.1 + 4 | 97.2 | 90.4 |
| | 0.1 + 3 | 87.2 | 85.5 |
| | 0.1 + 2 | 75.4 | 54.0 |
| | 0.1 + 1 | 74.1 | 38.0 |
| | 0.1 + 0.5 | 72.3 | 15.9 |
| | 0.1 + 0.3 | 62.0 | 4.4 |
| | 0.05 + 4 | 96.6 | 90.0 |
| | 0.05 + 3 | 89.7 | 85.0 |
| | 0.05 + 2 | 72.0 | 52.3 |
| | 0.05 + 1 | 70.4 | 35.8 |
| | 0.05 + 0.5 | 70.4 | 12.8 |
| | 0.05 + 0.3 | 57.0 | 0.9 |

Test Example 3 (Foliage Treatment Test)

In a field where weeds such as Solidago altissima, Agropyron smithii and Digitaria sanguinalis had been growing mixedly, foliage treatment application of a predetermined amount of each herbicidal composition which had been diluted with 15 ℓ, per are, of water and further admixed with 0.05 % (v/v) of a spreader (Shin Rino®) was done using a small spray gun when the average plant height of these weeds reached 20 to 40 cm. 30 days after the foliage treatment application, the herbicidal effect of the herbicidal composition was examined through visual observation according to the following evaluation criteria. The results are listed in Table 3.

| Rating | Inhibition Rate (%) |
|---|---|
| 1 | 0 to 19 |
| 2 | 20 to 29 |
| 3 | 30 to 39 |
| 4 | 40 to 49 |
| 5 | 50 to 59 |
| 6 | 60 to 69 |
| 7 | 70 to 79 |
| 8 | 80 to 89 |
| 9 | 90 to 99 |
| 10 | 100 |

Table 3

| | Amount of Application of Active Ingredients (g/a) | Rating |
|---|---|---|
| Compound A | 1 | 6 |
| | 0.5 | 5 |
| Ammonium salt of D,L-isomer of Compound B (commercial name: Basta) | 10 | 7 |
| | 5 | 5 |
| Ammonium salt of L-isomer of Compound B | 10 | 6 |
| | 5 | 5 |
| Sodium salt of L-isomer of Compound C (commercial name: Herbi-Ace) | 10 | 6 |
| | 5 | 5 |
| Compound A + Ammonium salt of D,L-isomer of Compound B (commercial name: Basta) | 1 + 10 | 10 |
| | 1 + 5 | 10 |
| | 0.5 + 10 | 10 |
| | 0.5 + 5 | 9 |
| Compound A + Ammonium salt of L-isomer of Compound B | 1 + 10 | 10 |
| | 1 + 5 | 10 |
| | 0.5 + 10 | 10 |
| | 0.5 + 5 | 8 |
| Compound A + Sodium salt of L-isomer of Compound C (commercial name: Herbi-Ace) | 1 + 10 | 10 |
| | 1 + 5 | 10 |
| | 0.5 + 10 | 10 |
| | 0.5 + 5 | 8 |

While the invention has been described in detail and with reference to specific embodiments thereof, it will be apparent to one skilled in the art that various changes and modifications can be made therein without departing from the spirit and scope thereof.

**Claims**

**Claims for the following Contracting States : AT, BE, CH, DE, DK, FR, GB, GR, IT, LI, LU, NL, SE**

1. A herbicidal composition comprising, as active ingredients, 1-(4,6-dimethoxypyrimidin-2-yl)-3-(3-trifluoromethyl-2-pyridylsulfonyl)urea or a salt thereof and at least one member selected from the group consisting of homoalanin-4-yl(methyl)phosphinic acid, 2-amino-4-[(hydroxy)(methyl)phosphinoyl]butyrylalanylalanine and salts thereof.

2. The herbicidal composition according to Claim 1, wherein the active ingredients are 1-(4,6-dimethoxypyrimidin-2-yl)-3-(3-trifluoromethyl-2-pyridylsulfonyl)urea or a salt thereof and homoalanin-4-yl(methyl)phosphinic acid or a salt thereof.

3. The herbicidal composition according to Claim 1, wherein the active ingredients are 1-(4,6-dimethoxypyrimidin-2-yl)-3-(3-trifluoromethyl-2-pyridylsulfonyl)urea or a salt thereof and 2-amino-4-[(hydroxy)(methyl)phosphinoyl]butyrylalanylalanine or a salt thereof.

4. The herbicidal composition according to Claim 2, wherein the active ingredients are 1-(4,6-dimethoxypyrimidin-2-yl)-3-(3-trifluoromethyl-2-pyridylsulfonyl)urea and ammonium D,L-homoalanin-4-yl(methyl)phosphinate.

5. The herbicidal composition according to Claim 3, wherein the active ingredients are 1-(4,6-dimethoxypyrimidin-2-yl)-3-(3-trifluoromethyl-2-pyridylsulfonyl)urea and sodium L-2-amino-4-[(hydroxy)(methyl)phosphinoyl]butyryl-L-alanyl-L-alanine.

6. The herbicidal composition according to Claim 1, wherein from 0.1 to 300 parts by weight of homoalanin-4-yl(methyl)phosphinic acid, 2-amino-4-[(hydroxy)(methyl)phosphinoyl]butyrylalanylalanine, or a salt thereof is mixed with 1 part by weight of 1-(4,6-dimethoxypyrimidin-2-yl)-3-(3-trifluoromethyl-2-pyridylsulfonyl)urea or a salt thereof.

7. The herbicidal composition according to Claim 1, wherein from 0.05 to 5 g, per are, of 1-(4,6-dimethoxypyrimidin-2-yl)-3-(3-trifluoromethyl-2-pyridylsulfonyl)urea or a salt thereof is used in combination with from 0.3 to 30 g, per are, of homoalanin-4-yl(methyl)phosphinic acid, 2-amino-4-[(hydroxy)(methyl)phosphinoyl)butyrylalanylalanine or a salt thereof, with the total amount of the two active ingredients being from 0.35 to 35 g per are.

8. Use of a composition according to any one of the claims 1 to 7 as a herbicide.

9. Use according to claim 8 for control of weeds in the agricultural and horticultural fields and non-crop lands.

**Claims for the following Contracting State : ES**

1. A process for preparing a herbicidal composition, which comprises combining from 1 to 98% by weight of active ingredients, in which from 0.1 to 300 parts by weight of at least one member selected from the group consisting of homoalanin-4-yl(methyl)phosphinic acid, 2-amino-4-[(hydroxy)(methyl)phosphinoyl]butyrylalanylalanine and salts thereof is mixed with 1 part by weight of 1-(4,6-dimethoxypyrimidin-2-yl)-3-(3-trifluoromethyl-2-pyridylsulfonyl)urea or a salt thereof, and at least one kind of adjuvants selected from the group consisting of solid carriers, antifreezing agents, spreaders, surfactants, crop oils, mineral oils, solvents and thickeners.

2. The process according to Claim 1, wherein the active ingredients are 1-(4,6-dimethoxypyrimidin-2-yl)-3-(3-trifluoromethyl-2-pyridylsulfonyl)urea or a salt thereof and homoalanin-4-yl(methyl)phosphinic acid or a salt thereof.

3. The process according to Claim 1, wherein the active ingredients are 1-(4,6-dimethoxypyrimidin-2-yl)-3-(3-trifluoromethyl-2-pyridylsulfonyl)urea or a salt thereof and 2-amino-4-[(hydroxy)(methyl)phosphinoyl]butyrylalanylalanine or a salt thereof.

4. The process according to Claim 2, wherein the active ingredients are 1-(4,6-dimethoxypyrimidin-2-yl)-3-(3-trifluoromethyl-2-pyridylsulfonyl)urea and ammonium D,L-homoalanin-4-yl(methyl)phosphinate.

5. The process according to Claim 3, wherein the active ingredients are 1-(4,6-dimethoxypyrimidin-2-yl)-3-(3-trifluoromethyl-2-pyridylsulfonyl)urea and sodium L-2-amino-4-[(hydroxy)(methyl)phosphinoyl]butyryl-L-alanyl-L-alanine.

6. Use of a composition obtainable by a process according to any one of the claims 1 to 5 as a herbicide.

7. Use according to claim 6 for control of weeds in the agricultural and horticultural fields and non-crop lands.

**Patentansprüche**

**Patentansprüche für folgende Vertragsstaaten : AT, BE, CH, DE, DK, FR, GB, GR, IT, LI, LU, NL, SE**

1. Herbizid-Zusammensetzung, die als wirksame Ingredienzen 1-(4,6-Dimethoxypyrimidin-2-yl)-3-(3-trifluormethyl-2-pyridylsulfonyl)harnstoff oder ein Salz desselben und mindestens eine Verbindung, ausgewählt aus der aus Homoalanin-4-yl(methyl)phosphinsäure, 2-Amino-4-[(hydroxy)(methyl)-phosphinoyl]butyrylalanylalanin und Salzen derselben bestehenden Gruppe, enthält.

2. Herbizid-Zusammensetzung nach Anspruch 1, in der die wirksamen Ingredienzien 1-(4,6-Dimethoxypyrimidin-2-yl)-3-(3-trifluormethyl-2-pyridylsulfonyl)harnstoff oder ein Salz desselben und Homoalanin-4-yl(methyl)phosphinsäure oder ein Salz derselben sind.

3. Herbizid-Zusammensetzung nach Anspruch 1, in der die wirksamen Ingredienzien 1-(4,6-Dimethoxypyrimidin-2-yl)-3-(3-trifluormethyl-2-pyridylsulfonyl)harnstoff oder ein Salz desselben und 2-Amino-4-[(hydroxy)(methyl)phosphinoyl]butyrylalanylalanin oder ein Salz desselben sind.

4. Herbizid-Zusammensetzung nach Anspruch 2, in der die wirksamen Ingredienzien 1-(4,6-Dimethoxypyrimidin-2-yl)-3-(3-trifluormethyl-2-pyridylsulfonyl)harnstoff und Ammonium-D,L-homoalanin-4-yl(methyl)phosphinat sind.

5. Herbizid-Zusammensetzung nach Anspruch 3, in der die wirksamen Ingredienzien 1-(4,6-Dimethoxypyrimidin-2-yl)-3-(3-trifluormethyl-2-pyridylsulfonyl)harnstoff und Natrium-L-2-amino-4-[(hydroxy)(methyl)phosphinoyl]butyryl-L-alanyl-L-alanin sind.

6. Herbizid-Zusammensetzung nach Anspruch 1, in der 0,1 bis 300 Gew.-Teile Homoalanin-4-yl-(methyl)phosphinsäure, 2-Amino-4-[(hydroxy)(methyl)phosphinoyl]butyrylalanylalanin oder ein Salz derselben mit einem Gew.-Teil 1-(4,6-Dimethoxypyrimidin-2-yl)-3-(3-trifluormethyl-2-pyridylsulfonyl)harnstoff oder einem Salz desselben vermischt sind.

7. Herbizid-Zusammensetzung nach Anspruch 1, bei der pro Ar zwischen 0,05 und 5 g 1-(4,6-Dimethoxypyrimidin-2-yl)-3-(3-trifluormethyl-2-pyridylsulfonyl)harnstoff oder ein Salz desselben in Kombination mit 0,3 bis 30 g Homoalanin-4-yl(methyl)phosphinsäure, 2-Amino-4-[(hydroxy)(methyl)phosphinoyl]butyrylalanylalanin oder einem Salz derselben pro Ar verwendet werden, wobei die Gesamtmenge der beiden wirksamen Ingredienzien 0,35 bis 35 g pro Ar ist.

8. Verwendung einer Zusammensetzung nach einem der Ansprüche 1 bis 7 als Herbizid.

9. Verwendung nach Anspruch 8 zur Bekämpfung von Unkräutern in landwirtschaftlichen und gartenbaulichen Feldern und auf Nicht-Ackerland.

**Patentansprüche für folgenden Vertragsstaat : ES**

1. Verfahren zur Herstellung einer Herbizid-Zusammensetzung, das ein Kombinieren von 1 bis 98 Gew.-% aktiver Ingredienzien, in denen 0,1 bis 300 Gew.-Teile mindestens einer Verbindung, ausgewählt aus der aus Homoalanin-4-yl(methyl)phosphinsäure, 2-Amino-4-[(hydroxy)(methyl)phosphinoyl]butyrylalanylalanin und Salzen derselben bestehenden Gruppe, mit einem Gew.-Teil 1-(4,6-Dimethoxypyrimidin-2-yl)-3-(3-trifluormethyl-2-pyridylsulfonyl)harnstoff oder einem Salz desselben vermischt sind, mit mindestens einer Art von Zusatzstoffen, ausgewählt aus der aus festen Trägerstoffen, Gefrierschutzmitteln, Netzmitteln, oberflächenaktiven Mitteln, Saatölen, Mineralölen, Lösungsmitteln und Verdickungsmitteln bestehenden Gruppe umfaßt.

2. Verfahren nach Anspruch 1, in dem die die wirksamen Ingredienzien 1-(4,6-Dimethoxypyrimidin-2-yl)-3-(3-trifluormethyl-2-pyridylsulfonyl)harnstoff oder ein Salz desselben und Homoalanin-4-yl(methyl)phosphinsäure oder ein Salz derselben sind.

3. Verfahren nach Anspruch 1, in dem die wirksamen Ingredienzien 1-(4,6-Dimethoxypyrimidin-2-yl)-3-(3-trifluormethyl-2-pyridylsulfonyl)harnstoff oder ein Salz desselben und 2-Amino-4-[(hydroxy)(methyl)phosphinoyl]butyrylalanylalanin oder ein Salz desselben sind.

4. Verfahren nach Anspruch 2, in dem die wirksamen Ingredienzien 1-(4,6-Dimethoxypyrimidin-2-yl)-3-(3-trifluormethyl-2-pyridylsulfonyl)harnstoff und Ammonium-D,L-homoalanin-4-yl(methyl)phosphinat sind.

5. Verfahren nach Anspruch 3, in dem die wirksamen Ingredienzien 1-(4,6-Dimethoxypyrimidin-2-yl)-3-(3-trifluormethyl-2-pyridylsulfonyl)harnstoff und Natrium-L-2-amino-4-[(hydroxy)(methyl)phosphinoyl]butyryl-L-alanyl-L-alanin sind.

6. Verwendung einer Zusammensetzung, die nach einem Verfahren gemäß einem der Ansprüche 1 bis 5 erhältlich ist, als Herbizid.

7. Verwendung nach Anspruch 6 zur Bekämpfung von Unkräutern auf landwirtschaftlichen und gartenbaulichen Feldern und auf Nicht-Ackerland.

**Revendications**

**Revendications pour les Etats contractants suivants : AT, BE, CH, DE, DK, FR, GB, GR, IT, LI, LU, NL, SE**

1. Composition herbicide comprenant, comme principes actifs, de la 1-(4,6-diméthoxypyrimidin-2-yl)-3-(3-trifluorométhyl-2-pyridylsulfonyl)urée ou un de ses sels et au moins un élément choisi dans le groupe constitué de l'acide homoalanin-4-yl(méthyl)phosphinique, de la 2-amino-4-[(hydroxy)(méthyl)phosphinoyl]butyrylalanylalanine et de leurs sels.

2. Composition herbicide selon la revendication 1, dans laquelle les principes actifs sont la 1-(4,6-diméthoxypyrimidin-2-yl)-3-(3-trifluorométhyl-2-pyridylsulfonyl)urée ou un de ses sels et l'acide homoalanin-4-yl(méthyl)phosphinique ou un de ses sels.

3. Composition herbicide selon la revendication 1, dans laquelle les principes actifs sont la 1-(4,6-diméthoxypyrimidin-2-yl)-3-(3-trifluorométhyl-2-pyridylsulfonyl)urée ou un de ses sels et la 2-amino-4-[(hydroxy)(méthyl)phosphinoyl]butyrylalanylalanine ou un de ses sels.

4. Composition herbicide selon la revendication 2, dans laquelle les principes actifs sont la 1-(4,6-diméthoxypyrimidin-2-yl)-3-(3-trifluorométhyl-2-pyridylsulfonyl)urée et le D,L-homoalanin-4-yl(méthyl)phosphinate d'ammonium.

5. Composition herbicide selon la revendication 3, dans laquelle les principes actifs sont la 1-(4,6-diméthoxypyrimidin-2-yl)-3-(3-trifluorométhyl-2-pyridylsulfonyl)urée et la L-2-amino-4-[(hydroxy)(méthyl)phosphinoyl]butyryl-L-alanyl-L-alanine sodique.

6. Composition herbicide selon la revendication 1, dans laquelle de 0,1 à 300 parties en masse d'acide homoalanin-4-yl(méthyl)phosphinique, de 2-amino-4-[(hydroxy)(méthyl)phosphinoylbutyrylalanylalanine ou d'un de leurs sels sont mélangées avec 1 partie en masse de 1-(4,6-diméthoxypyrimidin-2-yl)-3-(3-trifluorométhyl-2-pyridylsulfonyl)urée ou un de ses sels.

7. Composition herbicide selon la revendication 1, dans laquelle de 0,05 à 5 g par are de 1-(4,6-diméthoxypyrimidin-2-yl)-3-(3-trifluorométhyl-2-pyridylsulfonyl)urée ou d'un de ses sels sont utilisés en association avec de 0,3 à 30 g par are d'acide homoalanin-4-yl(méthyl)phosphinique, de 2-amino-4-[(hydroxy)(méthyl)phosphinoyl]butyrylalanylalanine ou d'un de leurs sels, la quantité totale des deux principes actifs étant comprise entre 0,35 et 35 g par are.

8. Utilisation d'une composition selon l'une quelconque des revendications 1 à 7 en tant qu'herbicide.

9. Utilisation selon la revendication 8 pour lutter contre les mauvaises herbes dans des champs agricoles et horticoles et dans des terres non cultivées.

**Revendications pour l'Etat contractant suivant : ES**

1. Procédé de préparation d'une composition herbicide, lequel comprend l'association de 1 à 98 % en masse de principes actifs, dans laquelle de 0,1 à 300 parties en masse d'au moins un élément choisi dans le groupe constitué de l'acide homoalanin-4-yl(méthyl)phosphinique, de la 2-amino-4-[(hydroxy)(méthyl)phosphinoyl]butyrylalanylalanine et de leurs sels sont mélangées avec 1 partie en masse de 1-(4,6-diméthoxypyrimidin-2-yl)-3-(3-trifluorométhyl-2-pyridylsulfonyl)urée ou d'un de ses sels et au moins un type d'adjuvants choisi dans le groupe constitué des véhicules solides, des agents antigel, des agents de dispersion, des agents tensioactifs, des huiles végétales, des huiles minérales, des solvants et des épaississants.

2. Procédé selon la revendication 1, dans lequel les principes actifs sont la 1-(4,6-diméthoxypyrimidin-2-yl)-3-(3-trifluorométhyl-2-pyridylsulfonyl)urée ou un de ses sels et l'acide homoalanin-4-yl(méthyl)-phosphinique ou un de ses sels.

3. Procédé selon la revendication 1, dans lequel les principes actifs sont la 1-(4,6-diméthoxypyrimidin-2-yl)-3-(3-trifluorométhyl-2-pyridylsulfonyl)urée ou un de ses sels et la 2-amino-4-[(hydroxy)(méthyl)-phosphinoyl]butyrylalanylalanine ou un de ses sels.

4. Procédé selon la revendication 2, dans lequel les principes actifs sont 1-(4,6-diméthoxypyrimidin-2-yl)-3-(3-trifluorométhyl-2-pyridylsulfonyl)urée et le D,L-homoalanin-4-yl(méthyl)phosphinate d'ammonium.

5. Procédé selon la revendication 3, dans lequel les principes actifs sont la 1-(4,6-diméthoxypyrimidin-2-yl)-3-(3-trifluorométhyl-2-pyridylsulfonyl)urée et la L-2-amino-4-[(hydroxy)(méthyl)phosphinoyl]butyryl-L-alanyl-L-alanine sodique.

6. Utilisation d'une composition qu'on peut obtenir par un procédé selon l'une quelconque des revendications 1 à 5 en tant qu'herbicide.

7. Utilisation selon la revendication 6 pour lutter contre les mauvaises herbes dans les champs agricoles et horticoles et dans les terres non cultivées.